# EUROPÄISCHE PATENTSCHRIFT

(11) **EP 4 021 248 B1**
(45) Veröffentlichungstag und Bekanntmachung des Hinweises auf die Patenterteilung: **27.12.2023**
(21) Anmeldenummer: 20758126.5
(22) Anmeldetag: 07.08.2020
(51) Int. Cl.: A47B 88/90, A47B 88/95, F16B 12/02, F16B 12/20, F16B 12/46

(54) **SEITENZARGE FÜR EINEN SCHUBKASTEN**
SIDE PANEL FOR A DRAWER
PANNEAU LATÉRAL POUR UN TIROIR

(30) Priorität: 26.08.2019 DE 102019122855
(43) Veröffentlichungstag der Anmeldung: 06.07.2022
(73) Patentinhaber: Paul Hettich GmbH & Co. KG, 32278 Kirchlengern (DE)
(72) Erfinder: KLAUS, Stefan, 32257 Bünde (DE); STUFFEL, Andreas, 31675 Bückeburg (DE); POPPENDIEK, Sebastian, 32257 Bünde (DE)
(74) Vertreter: Dantz, Jan Henning
(86) Internationale Anmeldenummer: PCT/EP2020/072279
(87) Internationale Veröffentlichungsnummer: WO 2021/037528

(56) Entgegenhaltungen:
- DE-U1- 29 818 651
- DE-U1-202015 100 770
- GB-A- 2 057 619
- US-B1- 6 390 359

## Beschreibung

Die vorliegende Erfindung betrifft eine Seitenzarge für einen Schubkasten mit einem vorderen Adapter, an dem Mittel zur Fixierung einer Frontblende vorgesehen sind, und einem hinteren Adapter, an dem Mittel zur Fixierung einer Rückwand vorgesehen sind, und einem Wandelement, das zwischen dem vorderen Adapter und dem hinteren Adapter gehalten ist, wobei an mindestens einem der beiden Adapter ein verschwenkbares Sicherungselement vorgesehen ist, das zwischen einer Öffnungsposition zur Montage des Wandelementes und einer Verriegelungsposition zur Verriegelung des Wandelementes an dem Adapter verschwenkbar ist.

In der WO 2018/166838 A1 ist eine Seitenzarge für einen Schubkasten offenbart, bei der ein plattenförmiges Wandelement zwischen zwei Halterungs-Baugruppen montiert ist. Hierfür weisen die beiden Halterungs-Baugruppen jeweils auf der zu dem Wandelement gewandten Seite einen Aufnahmekanal auf, in dem das Wandelement stirnseitig fixiert ist. Diese Art der Befestigung hat sich an sich bewährt, allerdings kann es zum Transport des Schubkastens notwendig sein, das Wandelement besser an den beiden Halterungs-Baugruppen zu sichern.

DE 20 2015 100 770 U1 offenbart eine Seitenzarge für einen Schublade.

US 6390359 offenbart einen Schubkasten mit faltbaren Seitenwänden, die an der Vorderwand und der Rückwand fixierbar sind. DE 298 18 651 offenbart eine Blendenbefestigung für Schubladen und GB 2 057 619 ein Eckteil zum Fixieren an einer Stirnseite eines Wandelementes.

Es ist daher Aufgabe der vorliegenden Erfindung, eine Seitenzarge für einen Schubkasten zu schaffen, die mit einfachen Mitteln ein Wandelement sicher zwischen zwei Adaptern fixieren kann.

Diese Aufgabe wird mit einer Seitenzarge mit den Merkmalen des Anspruches 1 gelöst.

Bei der erfindungsgemäßen Seitenzarge ist an zumindest einem der beiden Adapter ein verschwenkbares Sicherungselement vorgesehen, das zwischen einer Öffnungsposition zur Montage des Wandelementes und einer Verriegelungsposition zur Fixierung des Wandelementes an dem Adapter verschwenkbar ist. Dadurch kann das Sicherungselement zunächst in die Montageposition angeordnet werden, um das Wandelement zwischen den beiden Adaptern zu positionieren, um dann eine Verriegelung durch Verschwenken des Sicherungselementes zu bewirken. Das Wandelement kann dadurch mit einfachen Mitteln sicher fixiert werden. Unterhalb des Wandelementes ist eine Abdeckung vorgesehen, die eine Bodenträgerschiene teilweise überdeckt.

Vorzugsweise umgreift das Sicherungselement in der Verriegelungsposition das Wandelement an zumindest zwei Seiten. Insbesondere kann das Sicherungselement eine Oberseite des Wandelementes in der Verriegelungsposition übergreifen. Dies führt zu dem Vorteil, dass bei einem Transport des Schubkastens oder der Seitenzarge das Wandelement nicht nach oben verschoben werden kann, was zu Beschädigungen führen könnte.

Das Sicherungselement ist in der Verriegelungsposition vorzugsweise klemmend oder rastend festgelegt, so dass ein versehentliches Öffnen des Sicherungselementes verhindert wird.

Jeder Adapter weist in einer bevorzugten Ausgestaltung eine Aufnahmeleiste zum Einfügen einer Stirnseite des Wandelementes auf. Dabei kann eine erste Aufnahmeleiste im Querschnitt winkelförmig ausgebildet sein und eine zweite Aufnahmeleiste im Querschnitt U-förmig, so dass das Wandelement durch Einschieben in die U-förmige Aufnahmeleiste und anschließendes Verschwenken in die L-förmige Aufnahmeleiste montiert werden kann. Es ist natürlich auch möglich, beide Aufnahmeleisten L-förmig oder beide Aufnahmeleisten im Querschnitt U-förmig auszubilden, um jeweils eine Stirnseite an der Aufnahmeleiste zu fixieren.

Erfindungsgemäß ist an mindestens einem der beiden Adapterelement ein verschwenkbares Sicherungselement angeordnet. Dadurch kann nach der Positionierung der beiden Sicherungselemente in der Verriegelungsposition das Wandelement sicher zwischen den beiden Adaptern gehalten sein, insbesondere wenn beide Sicherungselemente auch eine Oberseite des Wandelements teilweise überdecken.

Vorzugsweise liegt zumindest ein Sicherungselement in der Verriegelungsposition zumindest teilweise an drei Seiten des Wandelementes an. Dadurch kann das Wandelement U-förmig umgriffen werden und formschlüssig oder auch kraftschlüssig fixiert werden.

Das Sicherungselement ist in der Einbauposition erfindungsgemäß um eine vertikale Achse verschwenkbar. Das Lager für die Schwenkachse kann entweder an der Aufnahmeleiste oder an dem Adapter angeordnet sein.

Das Wandelement ist bevorzugt als plattenförmiges Inlay ausgebildet. Ein solches Inlay kann beispielsweise aus Glas, Stein, Filz, Kunststoff, Holz oder einem anderen Material hergestellt sein.

Für einen besonderen optischen Effekt kann die Seitenzarge mit einem Leuchtmittel versehen werden, wobei das Sicherungselement dabei zusätzlich das Leuchtmittel und/oder ein Kabel zu dem Leuchtmittel in der Aufnahmeleiste für das Wandelement fixiert.

Das Sicherungselement ist in der montierten Position der Seitenzarge vorzugsweise teilweise, insbesondere auch vollständig durch eine Abdeckkappe überdeckt und von außen somit ganz oder teilweise nicht sichtbar. Dadurch kann die Befestigungsmechanik für das Wandelement für ein optisch ansprechendes Erscheinungsbild überdeckt werden. Die Abdeckung kann dabei verschwenkbar oder aufschiebbar ausgebildet sein.

Die Erfindung wird nachfolgend anhand mehrerer Ausführungsbeispiele mit Bezug auf die beigefügten Zeichnungen näher erläutert. Es zeigen:

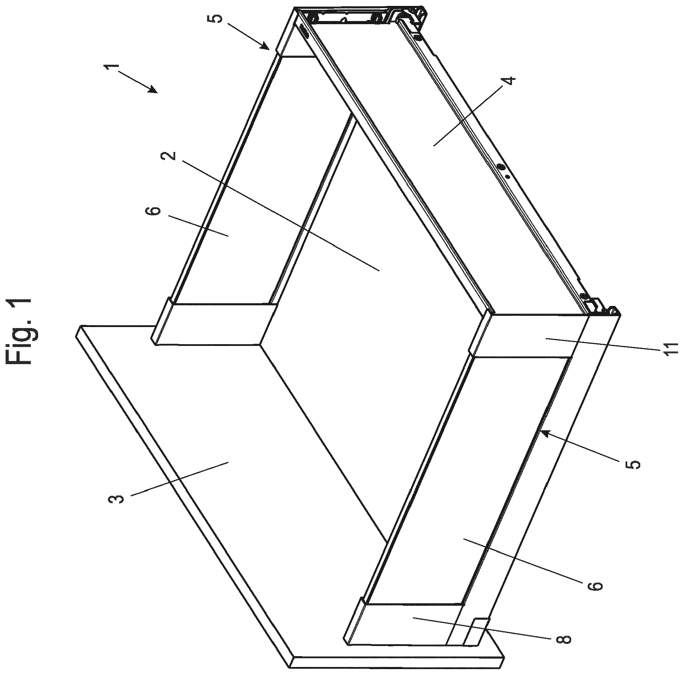

- Figur 1: eine perspektivische Ansicht eines erfindungsgemäßen Schubkastens;
- Figur 2: eine Ansicht einer Seitenzarge des Schubkastens der Figur 1 ;
- Figur 3: eine perspektivische Explosionsdarstellung der Seitenzarge der Figur 2;
- Figuren 4A und 4B: zwei Ansichten des vorderen Adapters der Seitenzarge der Figur 3;
- Figuren 5A und 5B: zwei Ansichten einer vorderen Aufnahmeleiste mit dem Sicherungselement;
- Figuren 6A und 6B: zwei Ansichten der Aufnahmeleiste mit dem Sicherungselement der Figur 5 in einer geöffneten Position;
- Figuren 7A und 7B: zwei Ansichten des hinteren Adapters;
- Figuren 8A und 8B: zwei Detailansichten des hinteren Adapters mit dem Sicherungselement;
- Figuren 9A und 9B: zwei Ansichten eines Adapters mit einem nicht erfindungsgemäßen modifizierten Sicherungselement in einer Öffnungsposition;
- Figuren 10A und 10B: zwei Ansichten des Adapters der Figur 9 mit dem Sicherungselement in der Verriegelungsposition;
- Figur 11: eine perspektivische Explosionsdarstellung eines modifizierten Adapters mit einem Leuchtmittel, und
- Figuren 12A und 12B: zwei Ansichten des Adapters der Figur 11 mit dem Sicherungselement in unterschiedlichen Positionen.

Ein Schubkasten 1, insbesondere für Möbel oder Haushaltsgeräte, umfasst einen Boden 2, an dem an einer Vorderseite eine Frontblende 3 und an einer Rückseite eine Rückwand 4 angeordnet sind. Die Frontblende 3 und die Rückwand 4 werden durch zwei Seitenzargen 5 miteinander verbunden. Jede Seitenzarge 5 weist ein plattenförmiges Wandelement 6 auf, das als Dekorelement ausgebildet ist und beispielsweise aus Glas, Holz, Beton, Kunststoff, Filz oder einem anderen Material hergestellt ist.

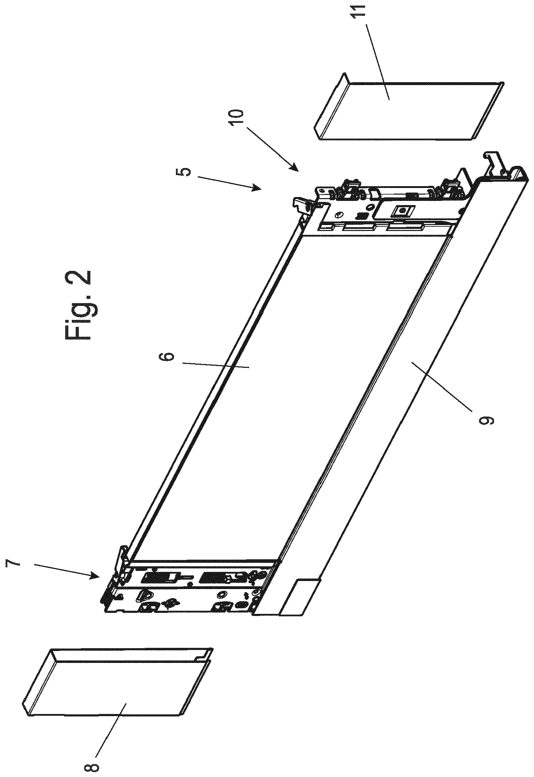

In Figur 2 ist eine Seitenzarge 5 im Detail gezeigt. Jede Seitenzarge 5 umfasst einen vorderen Adapter 7, der an einer vorderen Stirnseite des Wandelementes 6 und einen hinteren Adapter 10, der an einer rückseitigen Stirnseite des Adapters 6 angeordnet ist. Unterhalb des Wandelementes 6 ist eine Abdeckung 9 vorgesehen, die eine Bodenträgerschiene 12 teilweise überdeckt. Der vordere Adapter 7 ist durch eine vordere Abdeckkappe 8 überdeckt, die von oben auf den Adapter 7 aufgesteckt werden kann. Der hintere Adapter 10 ist durch eine rückseitige Abdeckkappe 11 überdeckt, die ebenfalls von oben aufgesteckt werden kann, so dass in der montierten Position nur die Abdeckkappen 8 und 11, die Abdeckung 9 sowie das Wandelement 6 der Seitenzarge 3 sichtbar sind.

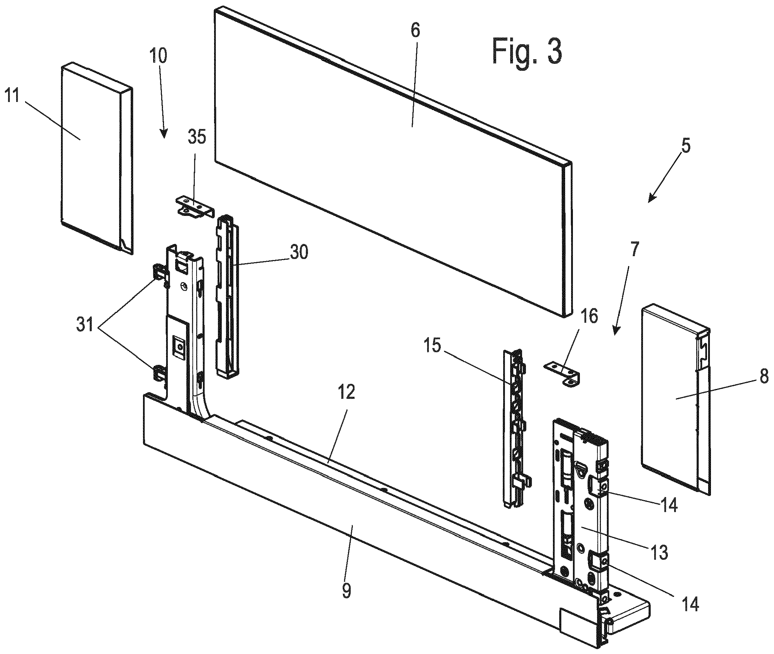

Wie in Figur 3 gezeigt ist, besitzt der vordere Adapter 7 eine Aufnahmeleiste 15, an der eine vordere Stirnseite des Wandelements 6 anlegbar ist. Oberhalb der Aufnahmeleiste 15 ist ein Sicherungselement 16 angeordnet, das verschwenkbar an dem Adapter 7 fixiert ist. Der Adapter 7 umfasst einen Träger 13, an dem Mittel 14 zur Fixierung der Frontblende 3 ausgebildet sind.

Auch der rückwärtige Adapter 10 umfasst eine Aufnahmeleiste 30, an der eine stirnseitige Kante des Wandelementes 6 einfügbar ist. An dem Adapter 10 ist ein weiteres Sicherungselement 35 verschwenkbar gelagert, welches oberhalb der Aufnahmeleiste 30 angeordnet ist. Der Adapter 10 weist zudem Mittel 31 zur Fixierung der Rückwand 4 auf.

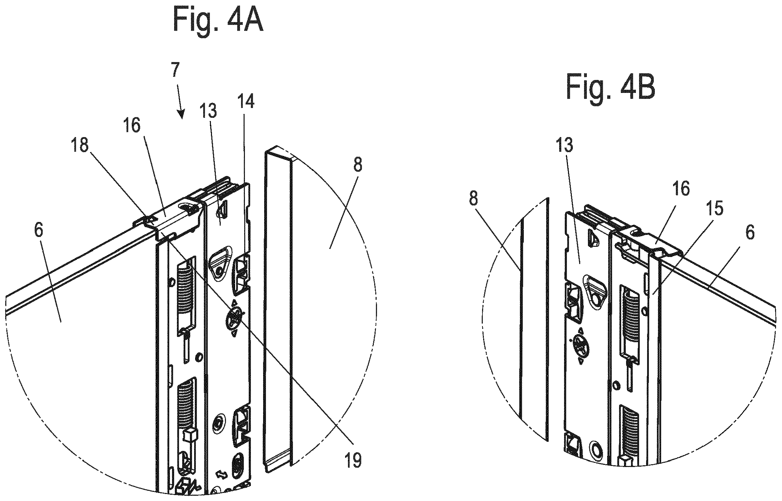

In den Figuren 4A und 4B ist der vordere Adapter 7 im Detail gezeigt. Das verschwenkbar gelagerte Sicherungselement 16 befindet sich in einer Verriegelungsposition. In dieser Verriegelungsposition überdeckt das Sicherungselement 16 einen Endabschnitt einer Oberseite des Wandelementes 6, so dass das Wandelement 6 in diesem Bereich nicht nach oben relativ zu einem Adapter 7 verschoben werden kann. Hierfür ist an dem Sicherungselement 16 ein oberer Haltesteg 18 ausgebildet. Von dem oberen Haltesteg 18 erstreckt sich ein seitlicher Haltesteg 19, der im Wesentlichen vertikal ausgerichtet ist und eine innere Seitenfläche des Wandelementes 6 teilweise überdeckt. Dadurch wird eine Bewegung des Wandelementes 6 nach innen durch den Haltesteg 19 begrenzt.

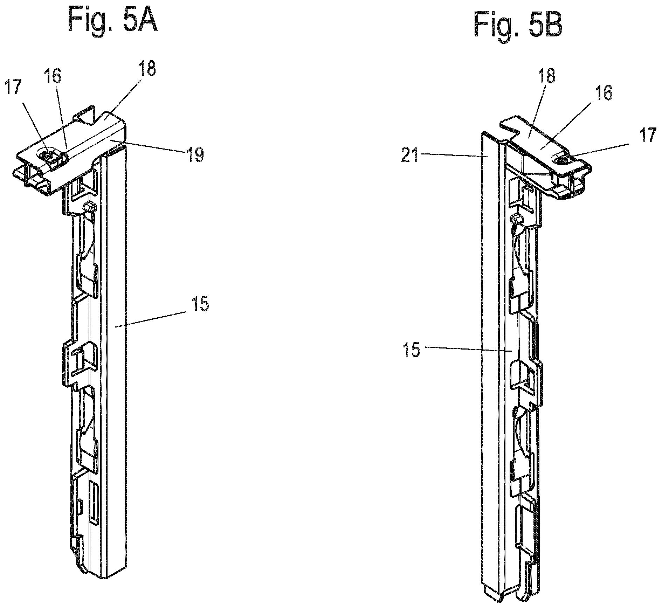

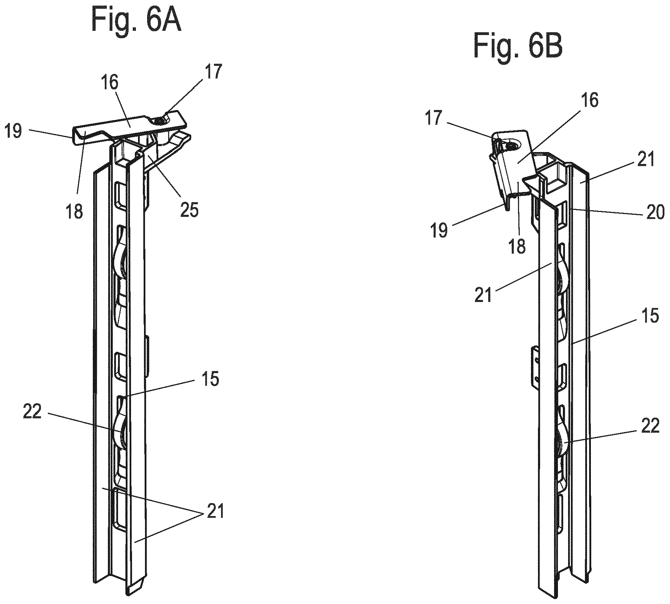

In den Figuren 5A und 5B ist die Aufnahmeleiste 15 ohne Wandelement 6, aber mit dem verschwenkbaren Sicherungselement 16 gezeigt. Die Aufnahmeleiste 15 umfasst hierbei zusätzlich eine Lageranordnung 25 für die Schwenkachse des Sicherungselements 16. Das Sicherungselement 16 umfasst neben dem oberen Haltesteg 18 und dem seitlichen Haltesteg 19 eine Achse 17, die in der Einbauposition vertikal ausgerichtet ist und mittels der das Sicherungselement 16 von einer Öffnungsposition in eine Verriegelungsposition verschwenkbar ist. In den Figuren 5A und 5B ist das Sicherungselement 16 in einer Verriegelungsposition angeordnet, während es in den Figuren 6A und 6B in einer Öffnungsposition gezeigt ist. In der Verriegelungsposition kann das Sicherungselement 16 durch Rastmittel fixiert sein. An der Aufnahmeleiste 15 selbst ist die Lageranordnung 25, insbesondere integral abgewinkelt, ausgebildet, um das Sicherungselement 16 um die Achse 17 drehbar zu lagern. Somit ergibt sich eine L-förmige Ausgestaltung der Aufnahmeleiste. Die Lageranordnung 25 greift dabei in eine Ausnehmung im oberen Bereich des Adapters 7 ein und stützt an dem Adapter 7 in vertikaler Richtung ab. Die Lageranordnung 25 kann statt an der Aufnahmeleiste 15 auch an dem Träger 13 oder dem Adapter 7, 10 wie in Figur 4A oder 4B ausgebildet sein.

Die Aufnahmeleiste 15 umfasst zwei vertikale Seitenwände 21, die das Wandelement 6 U-förmig umgreifen. An einem verbindenten Steg 20 zwischen den Seitenwänden 21 sind gebogene Federelemente 22 vorgesehen, die eine Verschiebung des Wandelementes 6 in Längsrichtung verhindern. Bei einem Verschwenken des Sicherungselementes 16 in die Verriegelungsposition wird zusätzlich eine Bewegung des Wandelementes 6 nach oben verhindert durch den Haltesteg 18. Dadurch ist das Wandelement 6 unverlierbar an dem Adapter 7 gehalten.

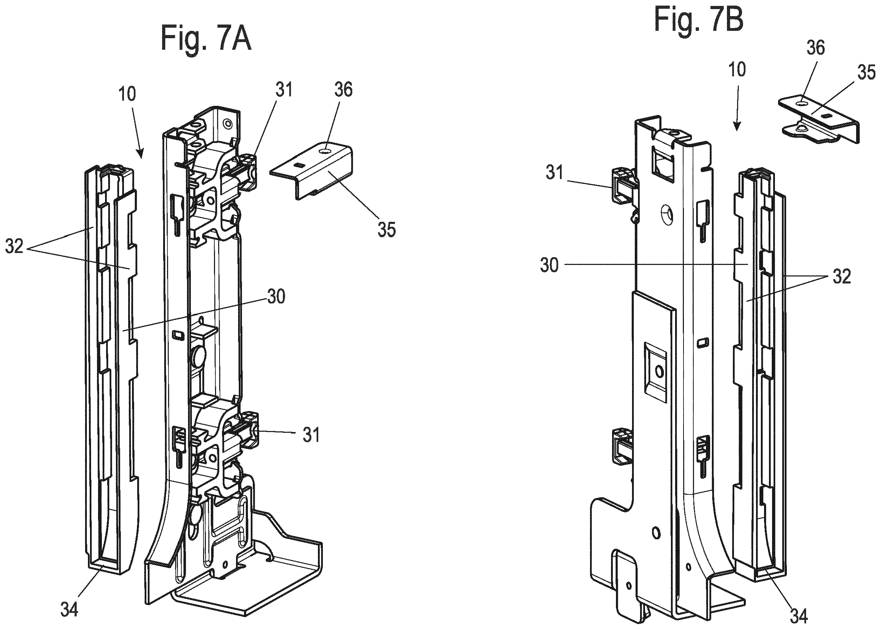

In den Figuren 7A und 7B ist der rückwärtige Adapter 10 im Detail gezeigt. Der rückwärtige Adapter 10 umfasst einen Träger, an dem die Mittel 31 zur Fixierung der Rückwand 4 ausgebildet sind. An dem Träger ist eine Aufnahmeleiste 30 fixiert, die zwei Seitenwände 32 aufweist, die eine Kante des Wandelementes 6 U-förmig umgreifen. An einer Unterseite weist die Aufnahmeleiste 30 einen Bodenabschnitt 34 auf, auf dem eine Unterseite des Wandelementes 6 endseitig aufliegt. Die Aufnahmeleiste 30 weist somit einen im Querschnitt U-förmigen Aufnahmekanal auf. An der Oberseite der Aufnahmeleiste 30 ist ein Sicherungselement 35 vorgesehen, das verschwenkbar an dem Träger gelagert ist.

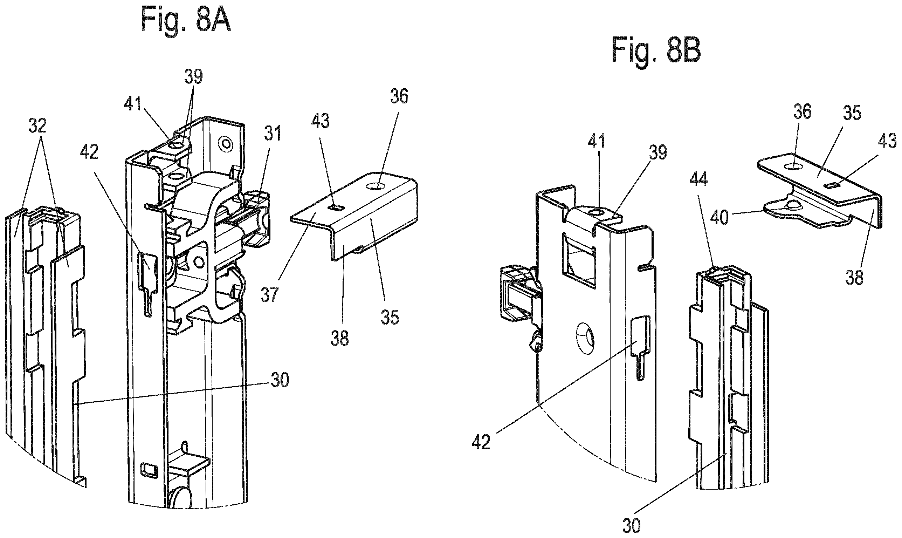

Wie aus den Detailansichten der Figuren 8A und 8B entnehmbar ist, sind an dem Träger zwei Lagerstege ausgebildet, die jeweils eine Öffnung 41 besitzen. Das Sicherungselement 35 umfasst einen oberen Haltesteg 37 und einen winkelförmig dazu angeordneten seitlichen Haltesteg 38. An dem oberen Haltesteg 37 ist eine kalottenförmige Prägung 36 ausgebildet. Zudem weist der obere Haltesteg 37 eine Ausnehmung 43. Integral mit dem seitlichen Haltesteg 38 ist ein unterer Steg ausgebildet, der sich parallel zu dem oberen Haltesteg 37 erstreckt und an dem ebenfalls eine kalottenförmige Prägung 40 ausgebildet ist. Die beiden kalottenförmigen Prägungen 36 und 40 sind in die Öffnungen 41 an den Lagerstegen 39 eingefügt, so dass ohne zusätzliche Lagerelemente das Sicherungselement 35 drehbar an dem Träger gehalten ist. Statt dieser Lageranordnung kann auch eine Lageranordnung mit Achsen eingesetzt werden.

Die Aufnahmeleiste 30 ist über Vorsprünge an dem Träger fixiert, wobei der Träger hierzu Öffnungen 42 aufweist, in die die Vorsprünge eingesteckt werden können. Dadurch kann die Aufnahmeleiste 30 werkzeugfrei an dem Träger montiert werden. Im oberen Bereich der Aufnahmeleiste 30 befindet sich ein integral ausgebildeter Federsteg 44, welcher mit der Ausnehmung 43 des Sicherungselementes 35 eine form- und / oder kraftschlüssige Verbindung ausbildet und das Sicherungselement 35 in der verriegelten Position hält.

Wie auch bei dem vorderen Adapter 7 kann bei dem Adapter 10 durch Verschwenken des Sicherungselementes 35 eine Oberseite des Wandelementes 6 durch den oberen Haltesteg 37 überdeckt werden. Zudem liegt der Haltesteg 38 an einer inneren Seite des Wandelementes 6 an.

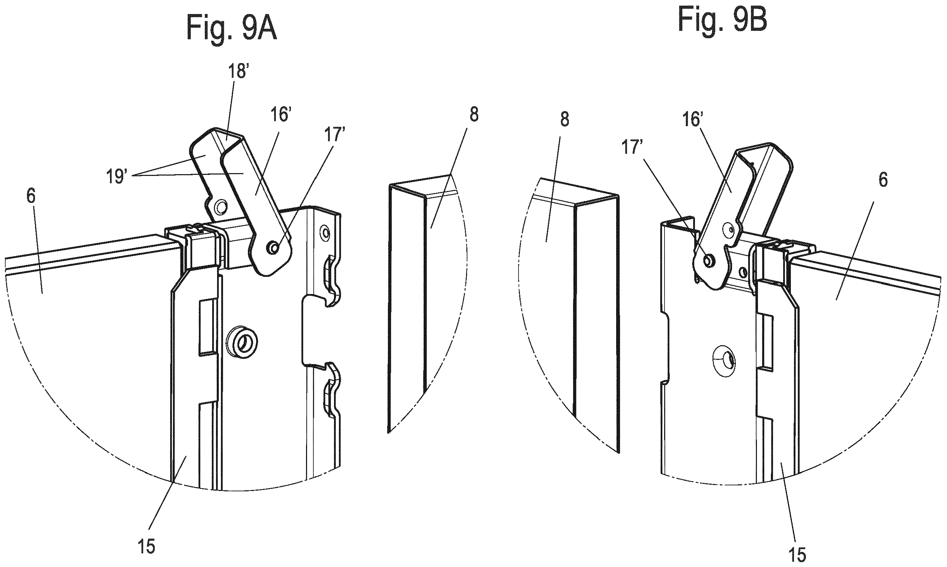

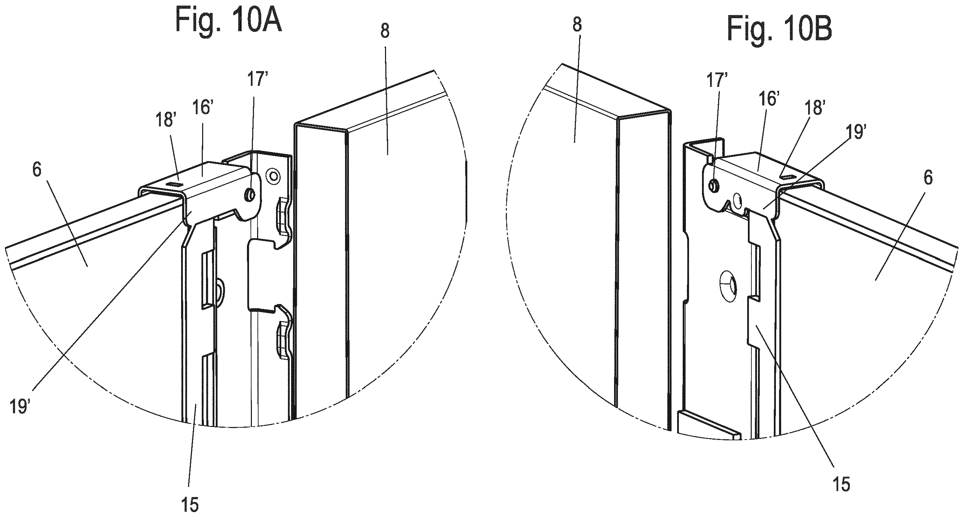

In den Figuren 9A und 9B ist ein modifiziertes nicht erfindungsgemäßes Beispiel gezeigt, bei dem an einer Aufnahmeleiste 15, die wahlweise an einer Vorderseite oder einer Rückseite des Wandelementes 6 positioniert werden kann, ein Sicherungselement 16' angeordnet ist, das statt um eine vertikale Achse um eine horizontale Achse 17' verschwenkbar gelagert ist. Das Sicherungselement 16' ist im Querschnitt U-förmig ausgebildet und umfasst einen oberen Haltesteg 18' und zwei seitliche Haltestege 19'. In der Öffnungsposition steht das Sicherungselement 16' von der Achse 17' nach oben hervor, so dass das Wandelement 6 von oben oder von der Seite an der Aufnahmeleiste 15 montiert werden kann. Um das Wandelement 6 an der Aufnahmeleiste 15 zu verriegeln, wird das Sicherungselement 16' um die Achse 17' verschwenkt, wie dies in den Figuren 10A und 10B gezeigt ist. In der Verriegelungsposition umgreift das Sicherungselement 16' das Wandelement 6 an drei Seiten, insbesondere auch an der Oberseite durch den Haltesteg 18'. Dadurch ist das Wandelement 6 unverlierbar an der Aufnahmeleiste 15 und dem zugehörigen Adapter fixiert.

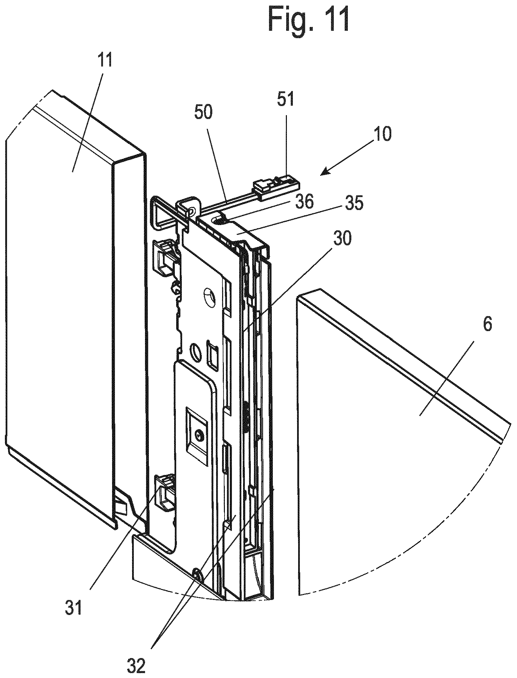

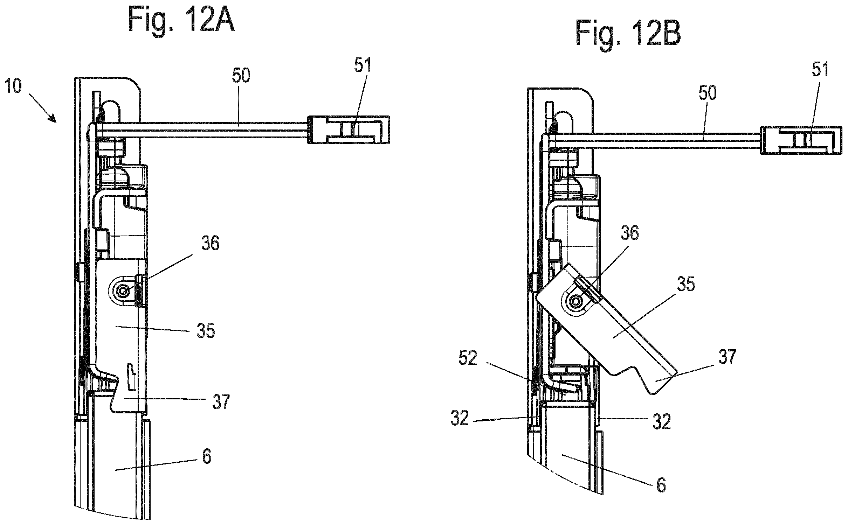

In Figur 11 ist ein weiteres Ausführungsbeispiel für einen Adapter 10 gezeigt, der wie in den Figuren 7 und 8 ausgebildet sein kann, aber auch als vorderer Adapter 7 einsetzbar ist. An dem Adapter 10 ist eine Aufnahmeleiste 30 vorgesehen, an der das Sicherungselement 35 um eine vertikale Achse verschwenkbar ist. Zusätzlich ist an dem Adapter 10 ein Kabel 50 verlegt, das mit einem Stecker 51 mit einer Stromversorgung verbunden ist, wobei am verbindenden Steg 33 der Aufnahmeleiste 30 zwischen den beiden Seitenstegen 32 mindestens ein Leuchtmittel vorgesehen ist, beispielsweise eine LED-Leiste. Dieses Leuchtmittel 52 strahlt Licht in die Stirnwand des Wandelementes 6 ab, das aus transparentem oder transluzentem Material hergestellt ist und somit den Schubkasten 1 beleuchtet. Über das Sicherungselement 35 wird die Verkabelung mit dem Kabel 50 fixiert, und optional auch das leistenförmige Leuchtmittel 52, das in Figur 12B sichtbar ist. In der Verriegelungsposition der Figur 12A überdeckt der obere Haltesteg 37 sowohl einen Teil der Oberseite des Wandelementes 6 als auch das Leuchtmittel 52.

Die verschiedenen Beispiele können beliebig miteinander kombiniert werden. Beispielsweise kann an einem Adapter ein Sicherungselement 16' eingesetzt werden, das um eine horizontale Achse verschwenkbar ist, und an dem anderen Adapter ein Sicherungselement, das um eine vertikale Achse verschwenkbar ist. Alternativ können die beiden Sicherungselemente beide um eine vertikale Achse verschwenkbar sein.

Zudem kann die Lageranordnung zur schwenkbaren Lagerung eines Sicherungselementes 16 oder 35 modifiziert werden. Statt der beiden Lagerstege und der drehbaren Lagerung über Prägekalotten können auch Achsen vorgesehen werden oder andere Lagerelemente.

### Bezugszeichenliste

- 1: Schubkasten
- 2: Boden
- 3: Frontblende
- 4: Rückwand
- 5: Seitenzarge
- 6: Wandelement
- 7: Adapter
- 8: Abdeckkappe
- 9: Abdeckung
- 10: Adapter
- 11: Abdeckkappe
- 12: Bodenträgerschiene
- 13: Träger
- 14: Mittel zur Fixierung
- 15: Aufnahmeleiste
- 16, 16': Sicherungselement
- 17, 17': Achse
- 18, 18': Haltesteg
- 19, 19': Haltesteg
- 20: Steg
- 21: Seitenwand
- 22: Federelement
- 25: Lageranordnung
- 30: Aufnahmeleiste
- 31: Mittel zur Fixierung
- 32: Seitenwand
- 33: Steg
- 34: Bodenabschnitt
- 35: Sicherungselement
- 36: Prägung
- 37: Haltesteg
- 38: Haltesteg
- 39: Lagersteg
- 40: Prägung
- 41: Öffnung
- 42: Öffnung
- 43: Ausnehmung
- 44: Federsteg
- 50: Kabel
- 51: Stecker
- 52: Leuchtmittel

## Patentansprüche

1. Seitenzarge (5) für einen Schubkasten (1) mit einem vorderen Adapter (7), an dem Mittel (14) zur Fixierung einer Frontblende (3) vorgesehen sind, und einem hinteren Adapter (10), an dem Mittel (31) zur Fixierung einer Rückwand (4) vorgesehen sind, und einem Wandelement (6), das zwischen dem vorderen Adapter (7) und dem hinteren Adapter (10) gehalten ist, wobei an mindestens einem der beiden Adapter (7, 10) ein verschwenkbares Sicherungselement (16, 16', 35) vorgesehen ist, das zwischen einer Öffnungsposition zur Montage des Wandelementes (6) und einer Verriegelungsposition zur Verriegelung des Wandelementes (6) an dem Adapter (7, 10) verschwenkbar ist, **dadurch gekennzeichnet, dass** unterhalb des Wandelementes (6) eine Abdeckung (9) vorgesehen ist, die eine Bodenträgerschiene teilweise überdeckt und das mindestens eine Sicherungselement (16, 35) in einer Einbausituation um eine vertikale Achse verschwenkbar ist.

2. Seitenzarge nach Anspruch 1, **dadurch gekennzeichnet, dass** das Sicherungselement (16, 16', 35) in der Verriegelungsposition das Wandelement (6) an zumindest zwei Seiten teilweise umgreift.

3. Seitenzarge nach Anspruch 1 oder 2, **dadurch gekennzeichnet, dass** eine Fläche des Sicherungselementes (16, 16', 35) eine Oberseite des Wandelementes (6) in der Verriegelungsposition übergreift.

4. Seitenzarge nach einem der vorhergehenden Ansprüche, **dadurch gekennzeichnet, dass** das Sicherungselement (16, 16', 35) in der Verriegelungsposition klemmend oder rastend festgelegt ist.

5. Seitenzarge nach einem der Ansprüche 1 bis 4, **dadurch gekennzeichnet, dass** jeder Adapter (7, 10) eine Aufnahmeleiste (15, 30) zum Einfügen einer Stirnseite des Wandelementes (6) aufweist.

6. Seitenzarge nach Anspruch 5, **dadurch gekennzeichnet, dass** eine erste Aufnahmeleiste (15) winkelförmig ausgebildet ist und eine zweite Aufnahmeleiste (30), die an einer gegenüberliegenden Stirnseite des Wandelementes (6) angeordnet ist, die Stirnseite U-förmig umgreift.

7. Seitenzarge nach einem der vorhergehenden Ansprüche, **dadurch gekennzeichnet, dass** an jedem Adapter (7, 10) ein verschwenkbares Sicherungselement (16, 16', 35) vorgesehen ist.

8. Seitenzarge nach einem der vorhergehenden Ansprüche, **dadurch gekennzeichnet, dass** zumindest ein Sicherungselement (16') in der Verriegelungsposition das Wandelement (6) an drei Seiten teilweise umgreift.

9. Seitenzarge nach einem der vorhergehenden Ansprüche 5 bis 8, **dadurch gekennzeichnet, dass** das mindestens eine Sicherungselement (16,16') verschwenkbar an mindestens einer der Aufnahmeleisten (15,30) angeordnet ist.

10. Seitenzarge nach einem der vorhergehenden Ansprüche, **dadurch gekennzeichnet, dass** über das mindestens eine Sicherungselement (35) ein Leuchtmittel (52) und/oder ein Kabel (50) zu dem Leuchtmittel (52) in der Aufnahmeleiste (30) fixierbar ist.

11. Seitenzarge nach einem der vorhergehenden Ansprüche, **dadurch gekennzeichnet, dass** das Sicherungselement (16, 16', 35) durch eine Abdeckkappe (8, 11) zumindest teilweise überdeckt ist.

12. Schubkasten (1) mit mindestens einer Seitenzarge (5) nach einem der vorhergehenden Ansprüche.

## Claims

1. Side panel (5) for a drawer (1) having a front adapter (7), on which means (14) are provided for fixing a front panel (3), and a rear adapter (10), on which means (31) are provided for fixing a rear panel (4), and a wall element (6), which is held between the front adapter (7) and the rear adapter (10), wherein on at least one of the two adapters (7, 10) a pivotable securing element (16, 16', 35) is provided, which is pivotable between an open position for mounting the wall element (6) and a locking position for locking the wall element (6) to the adapter (7, 10), **characterized in that** a cover (9) is provided beneath the wall element (6), which cover (9) partially covers a floor support rail and the at least one securing element (16, 35) can be pivoted about a vertical axis in a mounting position.

2. Side panel according to claim 1, **characterized in that** the securing element (16, 16', 35) in the locking position partially embraces the wall element (6) on at least two sides.

3. Side panel according to claim 1 or 2, **characterized in that** a surface of the securing element (16, 16', 35) engages over an upper surface of the wall element (6) in the locking position.

4. Side panel according to one of the preceding claims, **characterized in that** the securing element (16, 16', 35) is fixed in the locking position in a clamping or latching manner.

5. Side panel according to one of claims 1 to 4, **characterized in that** each adapter (7, 10) comprises a receiving strip (15, 30) for inserting an end face of the wall element (6).

6. Side panel according to claim 5, **characterized in that** a first receiving strip (15) is formed in an angular shape and a second receiving strip (30), which is arranged on an opposite end face of the wall element (6), embraces the end face in a U-shape.

7. Side panel according to one of the preceding claims, **characterized in that** a pivotable securing element (16, 16', 35) is provided on each adapter (7, 10).

8. Side panel according to one of the preceding claims, **characterized in that** at least one securing element (16') partially embraces the wall element (6) on three sides in the locking position.

9. Side panel according to one of the preceding claims 5 to 8, **characterized in that** the at least one securing element (16, 16') is pivotably arranged on at least one of the receiving strips (15, 30),

10. Side panel according to one of the preceding claims, **characterized in that** a lighting means (52) and/or a cable (50) to the lighting means (52) can be fixed in the receiving strip (30) via the at least one securing element (35).

11. Side panel according to one of the preceding claims, **characterized in that** the securing element (16, 16', 35) is at least partially covered by a cover cap (8, 11).

12. Drawer (1) with at least one side panel (5) according to one of the preceding claims.

## Revendications

1. Châssis latéral (5) pour un tiroir (1) avec un adaptateur avant (7), sur lequel sont prévus des moyens (14) pour la fixation d'un panneau avant (3), et un adaptateur arrière (10), sur lequel sont prévus des moyens (31) pour la fixation d'une paroi arrière (4), et un élément de paroi (6), qui est maintenu entre l'adaptateur avant (7) et l'adaptateur arrière (10), un élément de sécurité pivotant (16, 16', 35) qui peut pivoter entre une position d'ouverture pour le montage de l'élément de paroi (6) et une position de verrouillage pour le verrouillage de l'élément de paroi (6) sur l'adaptateur (7, 10), **caractérisé en ce qu'**il est prévu en dessous de l'élément de paroi (6) un recouvrement (9) qui recouvre partiellement un rail de support au sol et **en ce que** l'au moins un élément de sécurité (16, 35) peut pivoter autour d'un axe vertical dans une situation de montage.

2. Châssis latéral selon la revendication 1, **caractérisé en ce que** l'élément de sécurité (16, 16', 35) entoure partiellement l'élément de paroi (6) sur au moins deux côtés dans la position de verrouillage.

3. Châssis latéral selon la revendication 1 ou 2, **caractérisé en ce qu'**une surface de l'élément de sécurité (16, 16', 35) chevauche une face supérieure de l'élément de paroi (6) dans la position de verrouillage.

4. Châssis latéral selon l'une des revendications précédentes, **caractérisé en ce que** l'élément de sécurité (16, 16', 35) est fixé par serrage ou par encliquetage dans la position de verrouillage.

5. Châssis latéral selon l'une des revendications 1 à 4, **caractérisée en ce que** chaque adaptateur (7, 10) présente une baguette de réception (15, 30) pour l'insertion d'une face frontale de l'élément de paroi (6).

6. Châssis latéral selon la revendication 5, **caractérisé en ce qu'**une première baguette de réception (15) est réalisée en forme d'équerre et une deuxième baguette de réception (30), qui est disposée sur une face frontale opposée de l'élément de paroi (6), entoure la face frontale en forme de U.

7. Châssis latéral selon l'une des revendications précédentes, **caractérisé en ce qu'**un élément de sécurité pivotant (16, 16', 35) est prévu sur chaque adaptateur (7, 10).

8. Châssis latéral selon l'une des revendications précédentes, **caractérisé en ce qu'**au moins un élément de sécurité (16') entoure partiellement l'élément de paroi (6) sur trois côtés dans la position de verrouillage.

9. Châssis latéral selon l'une des revendications précédentes 5 à 8, **caractérisé en ce que** l'au moins un élément de sécurité (16, 16') est disposé de manière pivotante sur au moins l'une des baguettes de réception (15, 30).

10. Châssis latéral selon l'une des revendications précédentes, **caractérisé en ce qu'**un moyen d'éclairage (52) et/ou un câble (50) vers le moyen d'éclairage (52) peut être fixé dans la baguette de réception (30) par l'intermédiaire de l'au moins un élément de sécurité (35).

11. Châssis latéral selon l'une des revendications précédentes, **caractérisé en ce que** l'élément de sécurité (16, 16', 35) est au moins partiellement recouvert par un capuchon (8, 11).

12. Tiroir (1) avec au moins un châssis latéral (5) selon l'une des revendications précédentes.
